Europäisches Patentamt

European Patent Office

Office européen des brevets

(19)

(11) Publication number: **0 029 951**
**A2**

(12) **EUROPEAN PATENT APPLICATION**

(21) Application number: **80107114.3**

(22) Date of filing: **17.11.80**

(51) Int. Cl.³: **F 24 J 3/02**

(30) Priority: **28.11.79 IT 4165679**

(43) Date of publication of application:
**10.06.81 Bulletin 81/23**

(84) Designated Contracting States:
**AT BE CH DE FR GB LI LU NL SE**

(71) Applicant: **Velo Dalbrenta, Gianfranco**
**Via Comm. Angelo Velo 14**
**I-35014 Fontaniva (Province of Padova)(IT)**

(72) Inventor: **Velo Dalbrenta, Gianfranco**
**Via Comm. Angelo Velo 14**
**I-35014 Fontaniva (Province of Padova)(IT)**

(74) Representative: **Modiano, Guido et al,**
**MODIANO & ASSOCIATI S.A.S. Via Meravigli, 16**
**I-20123 Milan(IT)**

(54) **Solar collector.**

(57) A solar collector comprises a cylindrical or conical solar radiation pick-up or collecting surface (9) effective to rotate about its axis of symmetry to expose to radiation on time average the whole extension thereof. The collecting surface (9) is enclosed in a container (8) transparent to solar radiation and an automatically driven cleaning brush is provided for keeping the transparent container (8) clean.

Fig.2

EP 0 029 951 A2

0029951

This invention relates to a solar collector.

In recent times, special attention has been devoted to the development of alternative sources of energy, and solar collectors are among the devices which can recover the energy continuously delivered by the sun to the earth in amounts which have been estimated at about 0.8 to 0.9 KW per square meter at the ground level.

The collectors more widely utilized by small users are mostly of a planar type and oriented (or adapted for orientation) in an average position perpendicular to the apparent trajectory of the sun through the day.

Such collectors, which are of various constructions, cannot achieve very high efficiencies relatively to the space occupied by them, and even in good propagation conditions, cannot absorb all the impinging radiation.

Where a large amount of solar energy must be picked up, it becomes necessary to provide large surface areas for accommodating such planar collectors; this is not always possible also on account of technical and aesthetical limiting factors which do not permit the covering of a whole building with collecting panels.

This invention sets out to provide a collector which overcomes the difficulties and deficiencies of the system used heretofore.

Within that general aim, it can be arranged that the collector according to this invention has a high thermal exchange efficiency.

It is further possible to arrange that the solar collector of this invention affords a maximal utilization of the surface area available.

It is further possible to arrange that the collector of this invention blends itself, from an aesthetical standpoint, with the buildings whereon it is installed.

It is further possible to arrange that this collector is practically maintenance-free, durable, and economical to manufacture.

According to one aspect of the present invention, there is provided a solar collector, characterized in that it comprises a pick-up surface of substantially convex shape, such as cylindrical or conical shape, and enclosed in a container transparent to solar radiation, said pick-up surface being arranged such that its generatrices are arranged at optimal positions with respect to the average impinging direction of the radiation, said collector rotating about its own axis of symmetry to illuminate on time average the whole cylindrical surface, means being provided for distributing the fluid within the pick-up zone and keeping the transparent container clean.

Further features and advantages of the invention will be more clearly apparent from a detailed description of some embodiments thereof, given herein by way of example and not of limitation, and as illustrated in the accompanying drawings, where:

Figure 1 is a perspective view of a building incorporating two types of solar collectors according to this invention;

Figure 2 is a simplified side elevation of a first type of collector according to the invention;

Figure 3 is a detail view, in section, of said collector, showing its various component parts;

Figure 4 is a front view of a portion of said collector;

Figure 5 shows a variation of the collector of Figure 2;

Figure 6 shows a simplified diagram illustrating the operation of a system incorporating the collector according to this invention;

Figure 7 is a perspective view of a third type of collector, illustrating its general appearance after it has been installed on a roof;

Figure 8 shows a side cut-away view of the head of the third-type collector, illustrating the liquid-distribution system therein;

Figures 9a and 9b show schematically how the distributor is positioned in accordance with the average slant or altitude of the sun at different times of the year;

Figure 10 is a perspective cut-away view of the head with a positionable distributor; and

Figure 11 shows a simplified diagram of a system incorporating the third-type collector shown in the preceding figures.

With reference to the drawing figures, various types of collectors will be described hereinafter which are all based upon the same inventive concept.

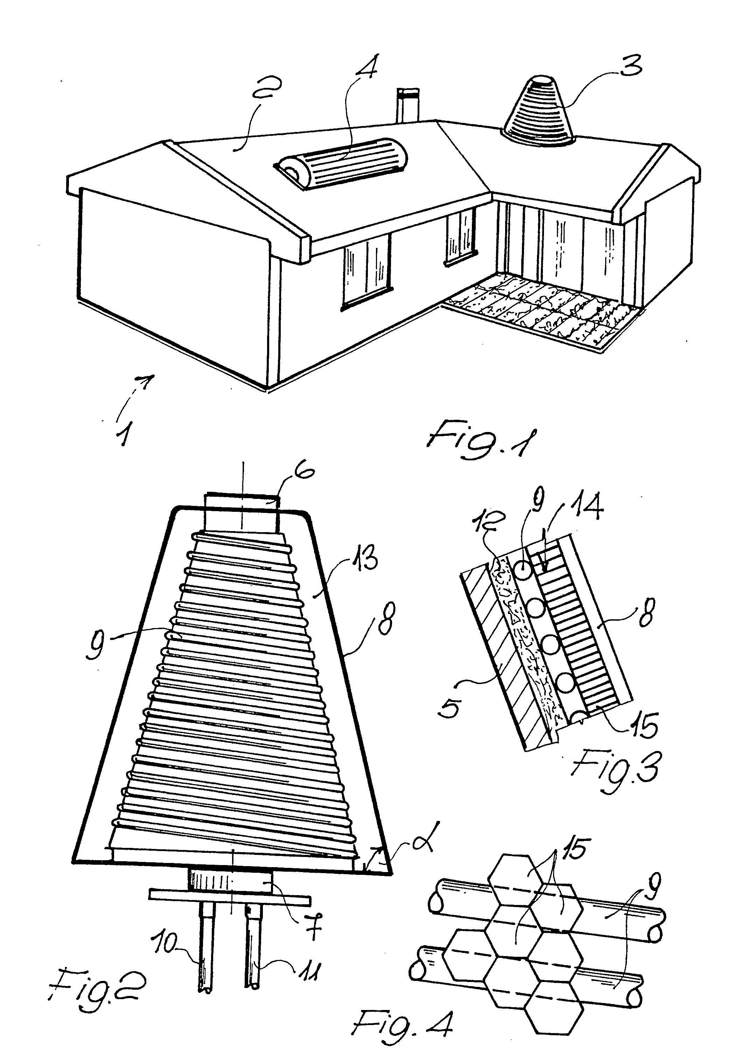

In Figure 1, there is shown a building 1' on the roof 2 whereof are installed (by way of example) a frusto-conical solar collector 3 of the first type and a cylindrical horizontal axis collector 4, which will be described hereinafter.

As may be seen at once, the two types of solar collectors shown in that figure have a shape which allows them to blend with the building such as to be in agreement with the building structure as a whole.

In Figure 2, there is shown the frusto-conical collector 3 of the first type: it comprises an inner load-bearing structure 5, shown in Figure 3, which serves a function of mechanical support of the assembly. That structure leads to an upper head 6 and lower or base head 7, whereto is associated an outer container 8 of frusto-conical shape, formed from a transparent material such as glass, plexiglass, or equivalents thereof, enclosing a pick-up pipe coil 9 therein.

That pipe coil 9, formed from a preferably metallic tube with the outer surface coated black, is wound around the load-bearing structure 5 in coils which may be spaced closely or far apart depending on the thermal distribution to be obtained as a function of size and exposure.

The angle $\alpha$ , corresponding to the slope of a generatrix of the conical surface of convolution of the pick-up coil 9, should be calculated as a function of the latitude whereat the collector will be installed and in accordance with the period when top efficiency should be reached.

As an example, considering that the sun at latitudes of Italy reaches in its apparent motion a maximum altitude of 68°, the angle $\alpha$ will be conveniently selected at about 45°, if the geometric axis of the collector is to be held vertical.

Within the lower or base head 7, there is contained a mechanism of a known type, which by utilizing the flow of liquid causes the whole solar collector to rotate about its own geometric axis.

Since the rotational speed is a low one and can be varied, instead of the device actuated by the circulation of exchange fluid, any other electronic, low consumption, servo-mechanism may be used.

In view of the rotation capability of the collector, the pick-up coil 9 is connected to the two pipes, respectively inlet 10 and outlet 11, by means of rotary fittings of a known type, such as to afford hydraulic continuity of the circuit at all times, regardless of the whole assembly rotating.

The pick-up coil 9 is insulated from the load-bearing structure 5 with the interposition of an insulating panel 12, and in the chamber 13 located between the outer transparent container 8 and coil 9, there may be suitably inserted a metallic receptacle structure 14 comprising a plurality of hexagonal prisms 15 in side-by-side relationship, which owing to their very small cross dimensions with respect to the collector radius of curvature have a virtually constant cross-section.

That receptacle structure 14 provides an effect which is known as "FRANCE effect" and operates in practice as a trap for the impinging radiation, which upon reaching the pick-up coil 9, while being partly re-emitted at different frequencies cannot leave the chamber 13, thus enhancing the hothouse effect.

The collector, upon exposure to solar radiation, is uniformly heated over its surface, as due to the constant rotation about its axis.

The effect develops within the chamber 13, and a convective exchange of heat takes place both at the portion illuminated by the sun and at the portion left in the shade.

At the illuminated portion, in addition to the exchange due to convection and hothouse effect, there also occur direct absorption of the impinging radiation.

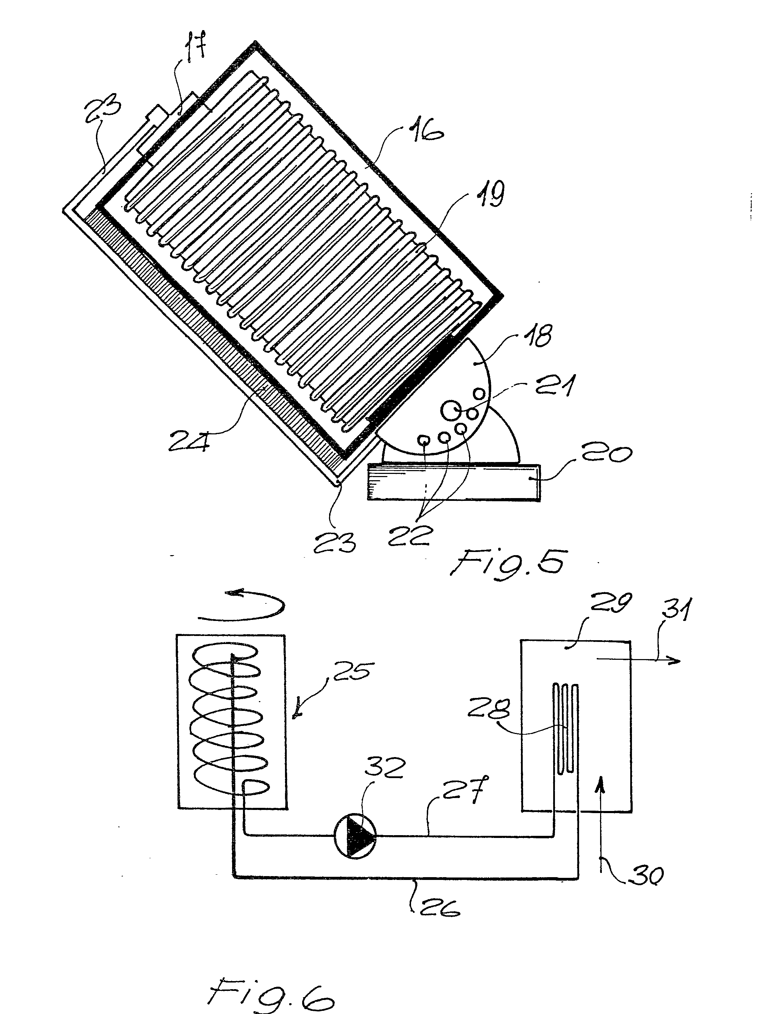

It is readily perceivable that, compared to a flat panel of equal bulk, the coil is much longer, and the exchange zone much broader, thus affording a higher efficiency of the collector. The collector illustrated in Figure 5 has similar operation characteristics.

In this embodiment, the structure is a cylindrical one, and comprises a transparent container 16 connected to the upper heads 17 and lower heads 18 rigid with the supporting structure for the pick-up coil, indicated here at 19.

The lower head 18 is connected to a base 20, by means of a hinge 21 which allows the collector to be tilted to a plurality of positions indexed by detents 22; the position will be selected in accordance with latitude and season, that is with the average position of the sun.

Between the two heads 17 and 18, there is a stationary C-like support 23 which does not rotate with the collector. That support 23 is positioned on the collector side which remains in the shade and supports, along a generatrix of the container 16, a brush 24 (or equivalent wiping means) which keeps the transparent surface constantly cleaned, thereby no dust is allowed to collect which would attenuate the impinging radiation.

In this case too, the collector rotates about its own geometric axis to expose a time average exchange surface which is $\pi$ times as large as that of a flat collector of equal bulk.

Figure 6 illustrates a system layout: the rotating collector, indicated at 25, is connected by means of pipes 26 and 27 to a coil 28 immersed in a storage tank 29, whereinto water is admitted from below through a passage 30 and discharged at the top through a passage 31.

Thus, the circuit of the collector 25 is of the closed type and the fluid, which may suitably be water and glycol or oil, is circulated by means of a small pump 32.

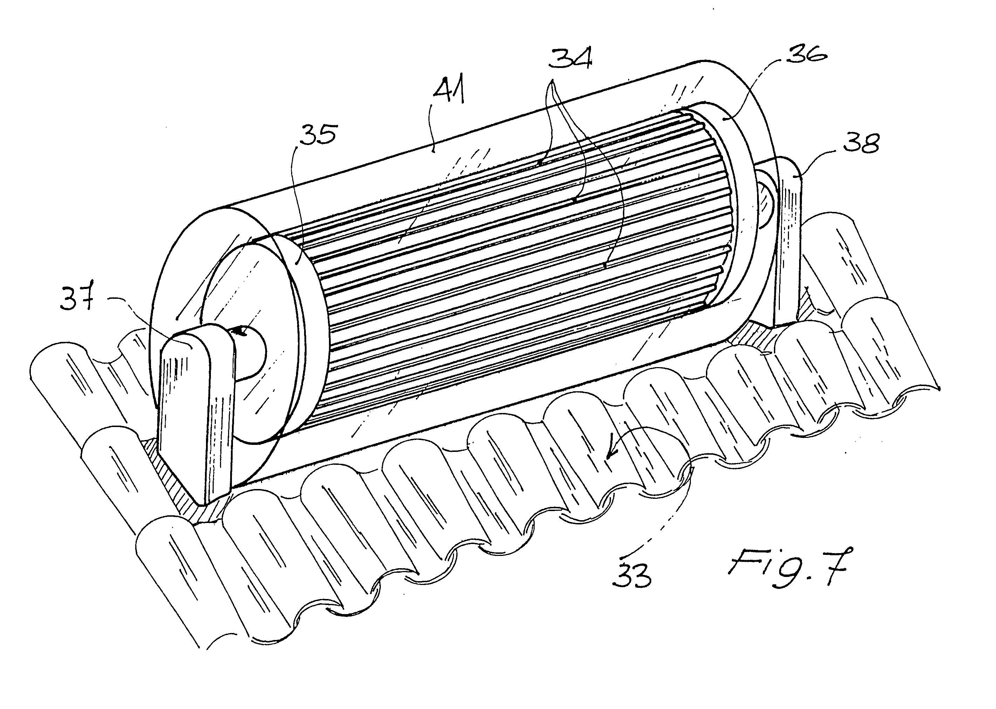

A third type of collector 7 is shown in Figure 7 and following ones.

The structure is again cylindrical and arranged with its axis horizontal on the roof 33 of a building, with a substantially parallel orientation with respect to the plane of apparent movement of the sun during the day.

That collector comprises a plurality of parallel tubes 34, arranged on a cylindrical surface along the generatrices of that surface.

Therefore, no pipe coil is used here, and the pick-up surface is in the form of parallel straight pipes 34.

Said pipes are connected to a first head, which will be called a feeding and pick-up one 35, and, at the opposite end, to a second head or connection head 36.

The assembly comprises two head supports 37 and 38, one of which, in this specific instance the one indicated at 37, encloses a fluid inlet conduit 39 and return conduit 40.

The assembly is then enclosed in a transparent container 41 which, together with any other devices already illustrated, allows both the passage of direct radiation and the building up of heat by hothouse effect.

Figure 8 shows more clearly the arrangement of the collector on a roof 33, in a seat 42 having the shape of an arc of a circle, wherein it is partially contained at the segment which will never be affected by the direct radiation.

Inside that seat 42, there is also provided a cleaning brush 43 which, during the rotation, cleans the transparent surface to remove dust and foreign materials therefrom.

The head 35, in the shape of a cylindrical chamber, is divided in two parts, respectively 35a and 35b, by a sector or partition 44 which can be rotated about a load-bearing stationary core 45, at the center whereof there is pivoted the rotation axis 46 of the assembly, again driven by a power device or by deriving the motion from the fluid flow or from an independent source.

That same core 45 is also penetrated by the conduits 39 and 40 which open respectively to the parts 35b and 35a making up the head 35.

In practice, the fluid which enters through the conduit 39 affects that part of the pipes 34 which, at the instant being considered, are connected to the section 35b of the head 35.

The fluid, which is cold, flows through those pipes to absorb the heat stored by the structure during the time when it has been exposed to direct radiation; at this stage, indicated at A in the equivalent diagram of Figure 11, the fluid is sufficiently cold to absorb heat at the fairly low temperature of the zone of the collector in the shade (at this stage there occurs no direct radiation from the sun).

After reaching the opposite head 36, the fluid is returned through the directly radiated pipes to absorb at this stage heat by direct radiation and from the structure.

In practice, the thermal flow which sweeps the assembly of the pipes exposed to direct radiation by the sun, which will be designated with $Q_{tot}$, is divided into an amount $Q_1$ which is immediately absorbed by the fluid, and an amount $Q_2$ which is stored in the structure and delivered during the shaded stage or phase of the collector.

If the amount $Q_2$ were not delivered during the shaded stage or phase to the colder fluid, it could not be exchanged with good efficiency because the temperature difference, between the fluid and structure, would be minimal.

To sum it up, considering a single pipe completing one revolution from the position 47 of Figure 8, it finds itself in a condition wherein it has stored a certain amount of low temperature heat; it is swept by clod fluid throughout the time it takes -- owing to the rotation of the collector -- to reach the position 48; at this point, it will have delivered in practice all that it could and moves on to the illuminated zone to take the position 49; from the position 49 to the position 50, it becomes heated by direct radiation, delivers heat to the hot fluid circulated therethrough, and stores more heat which it will deliver during the shaded phase.

To sum it up, the result is achieved of heating the fluid in two stages, based upon the assumption that the larger the temperature difference in a situation of thermal exchange, the larger is the amount of exchangeable heat.

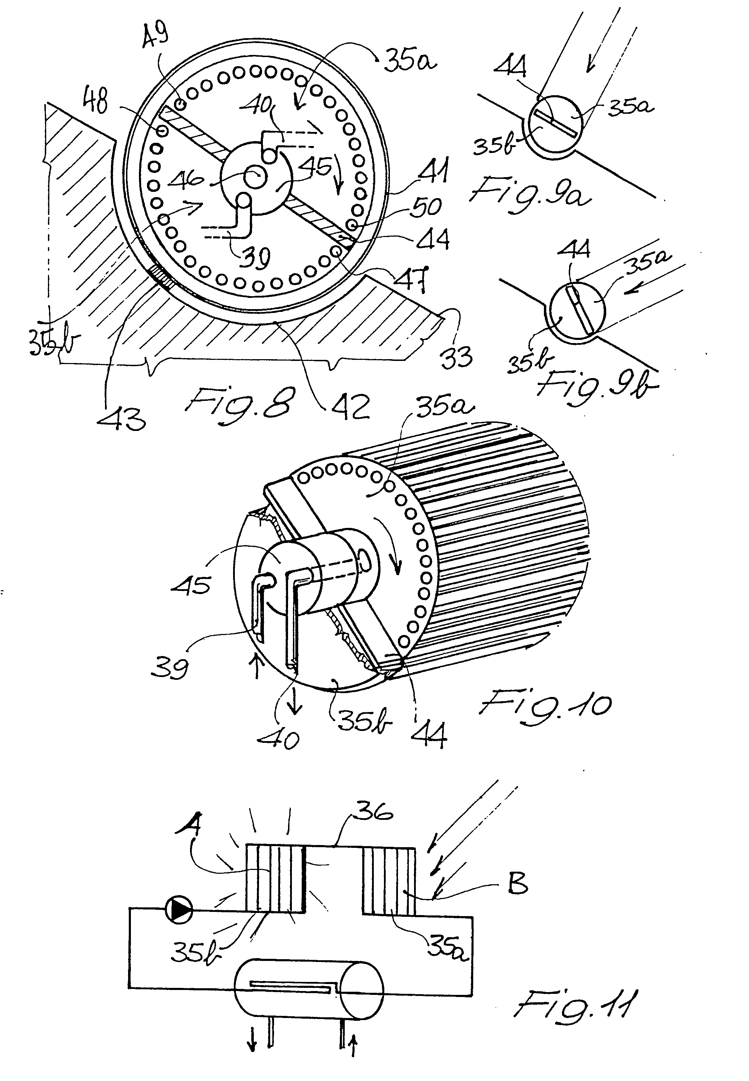

To separate the pipes which belong to the phase A of pre-heating from the phase B of overheating, the position of the sector 44 is varied which, as shown in Figures 9a and 9b, should be positioned substantially normal to the direction of the impinging radiation in accordance with season and latitude.

Based upon this same inventive concept, several practical embodiments are possible without departing from the scope of this invention.

The materials and dimensions may be any ones, as dictated by individual requirements.

## CLAIMS

1. A solar collector, characterized in that it comprises a pick-up surface (9) of substantially convex shape, such as cylindrical or conical shape, and enclosed in a container transparent to solar radiation, said pick-up surface being arranged such that its generatrices are arranged at optimal positions with respect to the average impinging direction of the radiation, said collector (3,4) rotating about its own axis of symmetry to illuminate on time average the whole cylindrical surface, means being provided for distributing the fluid within the pick-up zone and keeping the transparent container clean.

2. A solar collector according to Claim 1, characterized in that, in a first embodiment, said pick-up surface (9) comprises the enveloping surface of a pipe tightly coiled up on an insulating frusto-conical support (5).

3. A solar collector according to one or more of the preceding claims, characterized in that said pick-up surface (9) is enclosed within a frusto-conical container (8) which is transparent to solar radiation.

4. A solar collector according to one or more of the preceding claims, characterized in that, in the chamber (13) defined between the pick-up surface and transparent container (8), a hothouse effect is originated with the trapping of the impinging solar radiation.

5. A solar collector according to one or more of the preceding claims, characterized in that at least the coil assembly constituting the frusto-conical pick-up surface (9) rotates about its own geometric axis of symmetry to expose on time average the whole envelope surface.

6. A solar collector according to one or more of the preceding claims, characterized in that said rotation is effected through any low consumption power drive, and preferably through a mechanism driven by the circulation flow of the exchange fluid through the wound pipe (9) providing the pick-up surface (9).

7. A solar collector according to one or more of the preceding claims, characterized in that the inlet (10) and outlet (11) of said pick-up surface (9) are provided with fittings enabled to rotate while retaining their sealing capability.

8. A solar collector according to one or more of the preceding claims, characterized in that together with the pick-up surface (9) there also rotates said transparent container (8).

9. A solar collector according to one or more of the preceding claims, characterized in that in the chamber (13) created between the pick-up surface (9) and transparent container (8), there is interposed a receptacle structure (14) comprising a plurality of prisms (15) in side-by-side relationship and open to the pick-up surface (9) along a normal axis, said prisms (15) being adapted to form a trap for the impinging radiation (FRANCE effect as defined).

10. A solar collector according to one or more of the preceding claims, characterized in that the pick-up surface or element (19) is cylindrical and rotates about its own symmetry axis, said axis being tiltable with respect to a support rigid with the installation area such that it can be correctly arranged in accordance with the mean apparent angle of the sun.

11. A solar collector according to one or more of the preceding claims, characterized in that at the zone in the shade, preferably arranged along a generatrix of the transparent container, there is provided a cleaning device (24) which, by wiping the surface sliding past it during the rotation, keeps it clean by removing dust deposits, soot deposits, etc.

12. A solar collector according to one or more of the preceding claims, characterized in that the pick-up surface or element (34) comprises a plurality of pipes (34) arranged parallel to one another along generatrices of a horizontal cylinder, said pipes (34) being connected to two interconnecting heads (35,36), the assembly being enclosed within a transparent container (41).

13. A solar collector according to Claim 12, characterized in that a first head (35), comprising substantially a cylindrical chamber, is divided by a sector (44) in two parts (35a,35b), thereby one half of the pipes (34) are located on one side of said sector (44) and one half on the other side thereof.

14. A solar collector according to one or more of the preceding claims, characterized in that said sector (44) can be selectively rotated through the two halves of the collector, thereby, depending on season and the mean apparent angle of the sun, a first half is fully illuminated and a second half in the shade.

15. A solar collector according to one or more of the preceding claims, characterized in that the second head (36), located oppositely to the head (35) provided with the adjustable sector (44), interconnects hydraulically all of the pipes (34).

16. A solar collector according to one or more of the preceding claims, characterized in that in the two cylindrical chamber sections (35a,35b) defined in the first head (35) by the adjustable sector (44), there open in the former the collector delivery conduit (39) and in the latter the outlet conduit (40) of the collector.

17. A solar collector according to one or more of the preceding claims, characterized in that the delivery conduit or manifold (39) feeds the set of pipes (34) which are in the shade, the fluid, after flowing therethrough, being reversed and directed to the second head (36) to flow through the pipes (34) directly swept by the sun direct radiation.

18. A solar collector according to one or more of the preceding claims, characterized in that the pick-up cylinder formed by the set of said parallel pipes (34) is rotated uniformly about its own horizontal axis together with the heads (35,36), whereas stopped at the preset position remains but the sector (44) which divides the first head into two chambers, thereby an individual pipe (34) is connected for one semi-revolution to the delivery half-head (path in the shade) and for the second semi-revolution to the outlet half-head (path in the light).

19. A solar collector according to one or more of the preceding claims, characterized in that during the path in the shade, each pipe (34) preheats the fluid by transferring the heat stored during the exposure phase thereto, whilst during the path in the light the preheated fluid absorbs a maximum of direct impinging radiation.

Fig.1

Fig.2

Fig.3

Fig.4

Fig.5

Fig.6

Fig. 7

Fig.8

Fig.9a

Fig.9b

Fig.10

Fig.11